# EUROPÄISCHE PATENTANMELDUNG

(11) **EP 0 752 353 A1**
(43) Veröffentlichungstag der Anmeldung: **08.01.1997**
(21) Anmeldenummer: 96106582.8
(22) Anmeldetag: 26.04.1996
(51) Int. Cl.: B60S 3/04

(54) **Waschvorrichtung für Fahrzeugräder**

(30) Priorität: 05.07.1995 DE 19524443
(71) Anmelder: WESUMAT Fahrzeugwaschanlagen GmbH, D-86156 Augsburg (DE)
(72) Erfinder: Decker, Wolfgang, 86441 Zusmarshausen-Wollbach (DE)
(74) Vertreter: Liebau, Gerhard, Dipl.-Ing.

(57) **Zusammenfassung**

Die Waschvorrichtung für Fahrzeugräder, insbesondere in einer Waschstraße, weist eine zu beiden Seiten des Bewegungsbereichs des Fahrzeuges angeordnete, um eine horizontale Bürstenachse rotierende Waschbürste (6) auf, die in einer quer zur vertikalen Längsmittelebene (M) der Waschstraße beweglichen Halterung (7) gelagert ist und unter Wirkung einer Vorspannkraft an das Fahrzeug andrückbar ist. Die Waschbürste (6) ist als eine um eine parallel zur Längsmittelebene (M) verlaufende Bürstenachse (B) rotierende Walzenbürste ausgebildet. Ein Hochdruckradwäscher (10), mit mindestens einer um eine quer zur Längsmittelebene verlaufenden, horizontalen Drehachse (13) rotierenden Spritzdüse (14) ist an der Halterung (7) in Fahrzeugbewegungsrichtung (A) vor oder hinter der Waschbürste (6) in einem solchen Abstand (a2) gegenüber dieser angeordnet, daß der Hochdruckstrahl das Fahrzeug unbeeinträchtigt von der Waschbürste (6) erreichen kann.

## Beschreibung

Die Erfindung betrifft eine Waschvorrichtung für Fahrzeugräder, insbesondere in einer Waschstraße, mit je einer zu beiden Seiten des Bewegungsbereichs des Fahrzeuges angeordneten, um eine horizontale Bürstenachse rotierende Waschbürste, die in einer zur vertikalen Längsmittelebene der Waschstraße beweglichen Halterung gelagert ist und unter Wirkung einer Vorspannkraft an das Fahrzeug andrückbar ist, und mit mindestens einer, um eine quer zur Längsmittelebene verlaufende, horizontale Drehachse rotierende Spritzdüse, aus welcher ein Hochdruckstrahl unter spitzem Winkel zur Drehachse austritt, die gleichzeitig mit der Bürstenachse antreibbar ist.

Zur Wäsche der Felgen und Räder eines Kraftfahrzeuges werden bisher sowohl bei Waschstraßen wie auch bei Portalwaschanlagen in erster Linie Radwaschbürsten eingesetzt. Es handelt sich hierbei um Tellerbürsten, die auf das Fahrzeug zu bewegt werden, sobald sich das zu waschende Rad im Waschbereich der Waschbürste befindet. Damit das Kraftfahrzeug während der Radwäsche nicht stillgesetzt werden muß, sind diese Radwäscher auch in Fahrzeugbewegungsrichtung verschiebbar gelagert, so daß sie während der Radwäsche zusammen mit dem Fahrzeug weiterbewegt werden. Hierfür ist jedoch in der Regel ein gesonderter Antrieb und eine geeignete Steuereinrichtung erforderlich, wodurch die Herstellungskosten erhöht werden. Um den Wascheffekt derartiger Waschvorrichtungen zu verbessern, wurde auch schon vorgeschlagen, in den Bürstenteller zwei Hochdruckdüsen zu integrieren, die zusammen mit dem Bürstenteller rotieren. Obwohl die Tellerbürste im Bereich dieser Hochdruckdüsen keinen Borstenbesatz aufweist, hat diese Konstruktion den Nachteil, daß sich die Borsten beim Waschen der Felgen schräglegen und die Hochdruckstrahlen dann nicht mehr unmittelbar auf die Felgen, sondern auf die Borsten auftreffen. Die Wirkung des Hochdruckstrahles beschränkt sich dann auf ein verstärktes Abspülen der durch die Borsten gelösten Schmutzpartikel.

Es sind auch Hochdruckwaschvorrichtungen bekannt (US-PS 3 409 030), bei denen die drehbaren Hochdruckdüsen in bezug auf die Längsmittelebene der Waschstraße unbeweglich angeordnet sind. Derartige Hochdruckwaschsysteme funktionieren nur an derjenigen Seite, an der auch die Räder des Fahrzeuges durch die Fördereinrichtung, welche das Fahrzeug durch die Waschstraße schleppt, geführt sind. Auf der gegenüberliegenden Seite ist jedoch der Abstand zwischen den Rädern und der Hochdruckwaschvorrichtung infolge unterschiedlicher Fahrzeugbreiten sehr unterschiedlich. Bei schmäleren Fahrzeugen verliert der Hochdruckstrahl seine Wirkung fast völlig.

Der Erfindung liegt daher die Aufgabe zugrunde, eine Waschvorrichtung für Fahrzeugräder, insbesondere in einer Waschstraße, der eingangs erwähnten Art zu schaffen, die bei einfachem Aufbau eine gute Reinigung der Fahrzeugräder an beiden Fahrzeugseiten unabhängig von der jeweiligen Fahrzeugbreite ermöglicht.

Dies wird nach der Erfindung dadurch erreicht, daß die Waschbürste in an sich bekannter Weise als eine um eine parallel zur Längsmittelebene verlaufende Bürstenachse rotierende Walzenbürste ausgebildet ist, daß die Drehachse der Spritzdüse in einem separaten Gehäuse gelagert und von einem eigenen Antriebsmotor antreibbar ist und daß das Gehäuse an der Halterung in Fahrzeugbewegungsrichtung vor oder hinter der Waschbürste in einem solchen Abstand gegenüber dieser angeordnet ist, daß der Hochdruckstrahl das Fahrzeug unbeeinträchtigt von der Waschbürste erreichen kann.

Die Erfindung geht also von dem Gedanken aus, an jeder Fahrzeugseite eine übliche Walzenbürste zu verwenden, deren Bürstenachse horizontal und parallel zur Längsmittelebene angeordnet und in einer entsprechenden Halterung auf das Fahrzeug zu beweglich gelagert ist. Solche Walzenbürsten werden üblicherweise zur Reinigung des unteren Seitenbereiches des Fahrzeuges verwendet. Diese Walzenbürste ist dank der Halterung quer zur Längsmittelebene ausweichfähig gelagert und wird durch eine geeignete Vorspannkraft, wie z. B. Federkraft, Schwerkraft oder dergleichen, an die Seitenkontur des Fahrzeuges angedrückt, wobei sich automatisch ein gewisser Abstand zwischen der Bürstenachse und dem Fahrzeug einstellt. Die Erfindung geht dann weiterhin von dem Gedanken aus, an die Halterung einer solchen Bürste einen Hochdruckradwäscher anzubauen, der im wesentlichen aus der in einem Gehäuse gelagerten Drehachse, der Spritzdüse und einem Antriebsmotor besteht. Da die Waschbürste während ihrer Rotation der Seitenkontur des Fahrzeuges folgt und hierbei die Halterung, welche die Waschbürste trägt, automatisch in gleichbleibendem Abstand zur Seitenfläche des Fahrzeuges gehalten wird, ist gewährleistet, daß auch der an der Halterung angebaute Hochdruckradwäscher in dem gewünschten idealen Abstand zu dem zu waschenden Rad gehalten wird. Durch die rotierende Walzenbürste wird also der Abstand des Hochdruckradwäschers gegenüber dem Fahrzeug automatisch gesteuert, ohne daß hierzu eine eigene Steuerung für den Hochdruckradwäscher oder eine eigene Halterung, die eine Zustellung des Hochdruckradwäschers zum Fahrzeug ermöglichen würde, erforderlich sind. Hierdurch wird der Aufbau stark vereinfacht. Da außerdem die Drehachse der Spritzdüse in ausreichendem Abstand von der Walzenbürste angeordnet ist, kann der Hochdruckstrahl das Fahrzeug, insbesondere dessen Rad, unbeeinträchtigt von der Waschbürste erreichen, so daß ein ausgezeichnetes Waschergebnis erzielt wird.

Vorteilhafte Ausgestaltungen der Erfindung sind in den Unteransprüchen gekennzeichnet.

Die Erfindung ist in folgendem anhand eines in der Zeichnung dargestellten Ausführungsbeispieles näher erläutert.

Es zeigen:

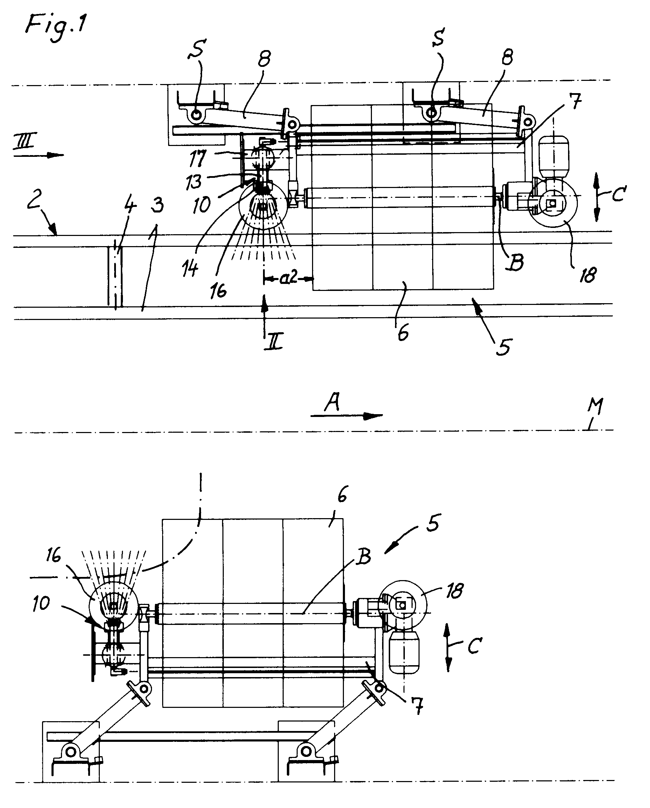

- Figur 1: eine Draufsicht auf eine Waschstraße mit je einer an beiden Seiten von deren Längsmittelebene angeordneten Waschvorrichtung,

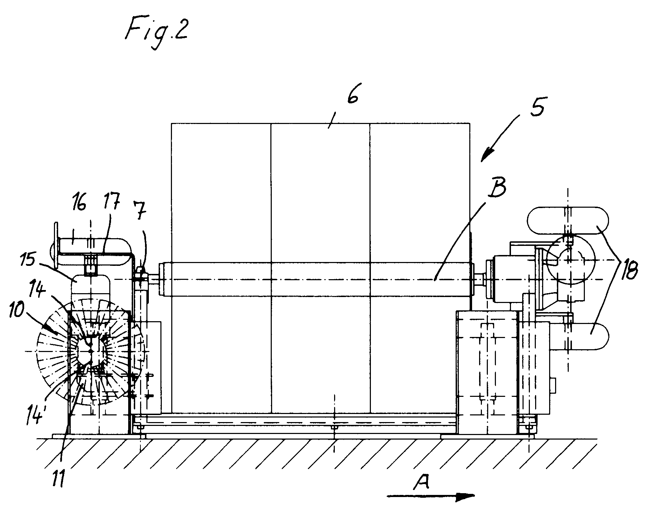

- Figur 2: eine Ansicht in Richtung II der Figur 1,

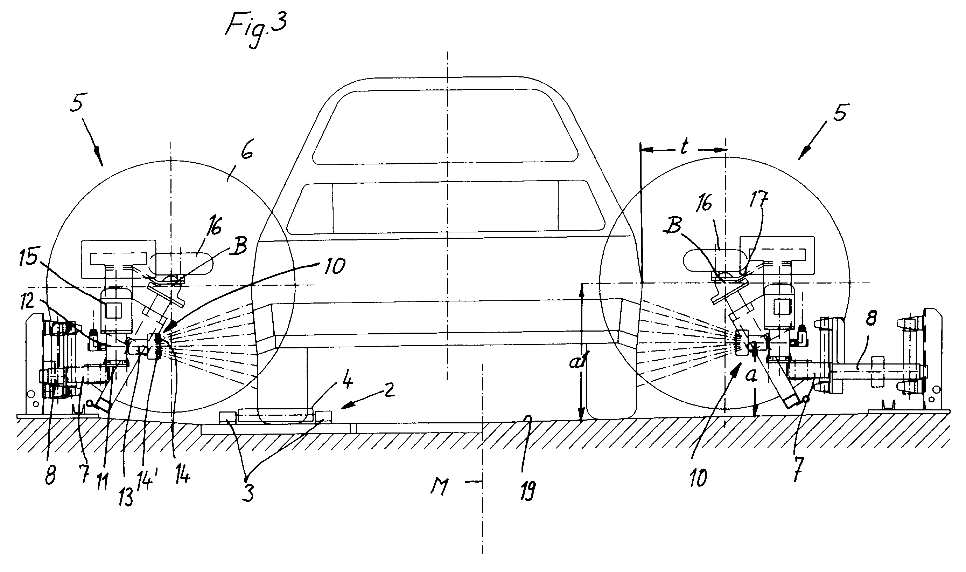

- Figur 3: eine Ansicht in Richtung III der Figur 1.

In der Zeichnung ist mit M die vertikale Längsmittelebene einer Waschstraße bezeichnet. Durch diese Waschstraße werden die zu waschenden Fahrzeuge mittels einer üblichen Fördereinrichtung 2 geschleppt. Hierbei handelt es sich in der Regel um zwei parallel zueinander verlaufende endlose Förderketten 3, zwischen denen Mitnehmerrollen 4 angeordnet sind, die sich an eines der Fahrzeugräder anlegen. Zu beiden Seiten des Bewegungsbereiches des Fahrzeuges ist je eine der erfindungsgemäßen Waschvorrichtungen 5 angeordnet. Da diese beiden Waschvorrichtungen einen identischen, jedoch spiegelbildlichen Aufbau aufweisen, ist nur eine der beiden Waschvorrichtungen im folgenden näher beschrieben.

Die Waschvorrichtung 5 weist eine als Walzenbürste ausgebildete Waschbürste 6 auf, die um eine horizontale und parallel zur Längsmittelebene verlaufende Bürstenachse B rotiert. Die Waschbürste 6 ist in einer Halterung 7 gelagert, die ausweichfähig in Richtung C quer zur Längsmittelebene beweglich ist. Zu diesem Zweck ist die Halterung über zwei Parallelogrammlenker 8 an zwei Stützen 9 angelenkt. Die Schwenkachsen S dieser Parallelogrammlenker 8 sind geringfügig gegenüber der Vertikalen zu der Längsmittelebene M hin geneigt, wodurch die Parallelogrammlenker 8 unter dem Gewicht der Halterung 7 und der Waschbürste 6 das Bestreben haben, zur Längsmittelebene M hin zu verschwenken. Hierdurch wird eine Vorspannkraft erzeugt, die die Waschbürste 6 an die Fahrzeugseitenfläche andrückt. Die Vorspannkraft könnte jedoch ggf. auch durch Federn, Gewichte oder pneumatisch erzeugt werden.

An jeder der Waschvorrichtungen 5 ist ferner in Fahrzeugbewegungsrichtung A vor der jeweiligen Waschbürste 6 ein Hochdruckradwäscher 10 angeordnet. Dieser Hochdruckradwäscher 10 ist über einen Tragarm 11 mit der jeweiligen Halterung 7 verbunden. Der Hochdruckradwäscher 10 besteht im wesentlichen aus einer in einem Gehäuse 12 drehbar gelagerten Drehachse 13, an deren einem Ende mindestens eine Spritzdüse 14 angeordnet ist. Außerdem ist zum Antrieb der Drehachse 13 ein Antriebsmotor 15 vorgesehen. Der Hochdruckstrahl tritt aus der Spritzdüse 14 unter spitzem Winkel zur Drehachse 13 aus. Ggf. kann auch noch eine zweite Spritzdüse 14' vorgesehen sein, deren Hochdruckstrahl unter einem anderen Winkel gegenüber der Drehachse 13 austritt. Die Drehachse 13 ist horizontal und senkrecht zur vertikalen Längsmittelebene M angeordnet. Bei der Bewegung der Halterung 7 in Richtung C quer zur Längsmittelebene wird auch der fest mit der Halterung verbundene Hochdruckradwäscher 10 in Richtung C bewegt.

Die Drehachse 13 des Hochdruckradwäschers 10 ist in einem Abstand a gegenüber der Fahrbahn 19 angeordnet, der in etwa dem mittleren Radius der zu waschenden Fahrzeugräder entspricht. Da die Waschbürste 6 den Seitenbereich des Fahrzeuges etwa bis zur Höhe der Fenster waschen soll, ist die Bürstenachse B höher angeordnet als die Drehachse 13, und ihr Abstand a1 von der Fahrbahn 19 ist etwa doppelt so groß als der Abstand a.

Ferner ist das Gehäuse 12 bzw. die Drehachse 13 in einem solchen Abstand a2 von der Waschbürste angeordnet, daß der Hochdruckstrahl das Fahrzeug unbeeinträchtigt von der Waschbürste erreichen kann.

Oberhalb des Spritzkegels der Spritzdüse 14, 14' ist ein um eine vertikale Achse drehbares Stützrad 16 vorgesehen, dessen Achse mit der Halterung 7 über einen weiteren Tragarm 17 verbunden ist. Der Zweck dieses Stützrades 16 und weiterer Stützräder 18 am anderen Ende der Waschbürste 6 ist aus der nachstehenden Funktionsbeschreibung zu entnehmen.

Die Wirkungsweise der Waschvorrichtung ist folgende:

Bevor ein Fahrzeug eine der beiden Waschbürsten 6 erreicht, werden diese in Drehung versetzt. Sobald die Front des Fahrzeuges mit der jeweiligen Waschbürste 6 in Berührung kommt, wird diese entgegen der Vorspannkraft etwas zur Seite gedrückt, d. h. von der Längsmittelebene M nach außen bewegt. Die Stützräder 16 sind so an der Halterung angeordnet, daß diese normalerweise nicht in Kontakt mit der Karosserie gelangen. Sie dienen lediglich als Sicherheitseinrichtung für den Fall, daß die Waschbürste 6 nicht rotieren sollte, oder für außergewöhnliche Fahrzeugkonturen. In solchen Fällen stellen die Stützräder 16 sicher, daß das Fahrzeug nicht mit der Halterung 7 in Berührung kommt. Wenn die Borsten der rotierenden Waschbürste 6 mit dem Fahrzeug in Berührung kommen, werden sie abhängig von der Rotationsgeschwindigkeit und der Vorspannung etwas zusammengedrückt, wobei sich jedoch stets ein bestimmter Abstand t zwischen der Fahrzeugoberfläche und der Bürstenachse B einstellt. Dieser Umstand wird dazu ausgenutzt, den Hochdruckradwäscher 10 im richtigen Abstand gegenüber dem zu waschenden Fahrzeugrad zu plazieren. Während das Fahrzeug durch die Fördereinrichtung 2 in Richtung A weitergeschleppt wird, kommen die einzelnen Fahrzeugräder nach und nach in den Bereich der rotierenden Hochdruckstrahlen der beiden Hochdruckwäscher 10 und werden durch die Hochdruckstrahlen gründlich gereinigt. Die Waschbürste 6 gewährleistet, daß der jeweilige Hochdruckwäscher in idealem Abstand zum jeweils zu waschenden Rad gehalten wird. Die Stützräder 18 haben einen ähnlichen Zweck wie die Stützräder 17. Die beiden Hochdruckradwäscher 10 können während der gesamten Seitenwäsche des Fahrzeuges betrieben werden und bewirken dann eine zusätzliche Reinigung der Seitenflächen. Es ist jedoch auch möglich, die Hochdruckradwäscher immer nur dann in Betrieb zu nehmen, wenn sich eines der Fahrzeugräder im Waschbereich des zugehörigen Hochdruckradwäschers 10 befindet.

## Patentansprüche

1. Waschvorrichtung für Fahrzeugräder, insbesondere in einer Waschstraße, mit je einer zu beiden Seiten des Bewegungsbereichs des Fahrzeuges angeordneten, um eine horizontale Bürstenachse rotierenden Waschbürste, die in einer quer zur vertikalen Längsmittelebene der Waschstraße beweglichen Halterung gelagert ist und unter Wirkung einer Vorspannkraft an das Fahrzeug andrückbar ist, und mit mindestens einer um eine quer zur Längsmittelebene verlaufende, horizontale Drehachse rotierenden Spritzdüse, aus welcher ein Hochdruckstrahl unter spitzem Winkel zur Drehachse austritt, die gleichzeitig mit der Bürstenachse antreibbar ist, **dadurch gekennzeichnet**, daß die Waschbürste (6) in an sich bekannter Weise als eine um eine parallel zur Längsmittelebene (M) verlaufende Bürstenachse (B) rotierende Walzenbürste ausgebildet ist, daß die Drehachse (13) der Spritzdüse (14, 14') in einem separaten Gehäuse (12) gelagert und von einem eigenen Antriebsmotor (15) antreibbar ist und daß das Gehäuse (12) an der Halterung (7) in Fahrzeugbewegungsrichtung (A) vor oder hinter der Waschbürste (6) in einem solchen Abstand (a2) gegenüber dieser angeordnet ist, daß der Hochdruckstrahl das Fahrzeug unbeeinträchtigt von der Waschbürste (6) erreichen kann.

2. Vorrichtung nach Anspruch 1, **dadurch gekennzeichnet**, daß die Drehachse (13) der Spritzdüse (14, 14') unterhalb der Bürstenachse (B) angeordnet ist.

3. Vorrichtung nach Anspruch 2, **dadurch gekennzeichnet**, daß der Abstand (a) der Drehachse (13) von der Fahrbahn (19) etwa halb so groß ist wie der Abstand (a1) der Bürstenachse (B) von der Fahrbahn (19).

4. Vorrichtung nach Anspruch 1, **dadurch gekennzeichnet**, daß oberhalb des Spritzkegels der Spritzdüse (14, 14') ein um eine vertikale Achse drehbares Stützrad (16) vorgesehen ist, dessen Achse mit der Halterung (7) über einen Tragarm (17) verbunden ist.
